# EUROPEAN PATENT SPECIFICATION

(11) **EP 3 188 295 B1**
(45) Date of publication and mention of the grant of the patent: **09.01.2019**
(21) Application number: 16202880.7
(22) Date of filing: 08.12.2016
(51) Int. Cl.: H01M 8/04089, F02M 21/02

(54) **SEALING STRUCTURE OF PRESSURE REGULATOR FOR HYDROGEN FUEL CELL ELECTRIC VEHICLE**
DICHTUNGSSTRUKTUR EINES DRUCKREGLERS FÜR EIN ELEKTRISCHES WASSERSTOFFBRENNSTOFFZELLENFAHRZEUG
STRUCTURE D'ÉTANCHÉITÉ DE RÉGULATEUR DE PRESSION POUR VÉHICULE ÉLECTRIQUE À PILE À COMBUSTIBLE HYDROGÈNE

(30) Priority: 21.12.2015 KR 20150182972
(43) Date of publication of application: 05.07.2017
(73) Proprietor: Motonic Corporation, Seoul 03142 (KR)
(72) Inventor: Ryul, Lee Sang, 42702 Daegu (KR); Hyeok, Lee Jun, 42702 Daegu (KR); Gil, Jang Sung, 42702 Daegu (KR); Heon, Kang Yong, 42702 Daegu (KR); Yong, Park Nam, 42702 Daegu (KR)
(74) Representative: Müller Verweyen

(56) References cited:
- WO-A2-2011/008898
- US-A1- 2008 202 603
- US-A1- 2009 242 043

## Description

### BACKGROUND OF THE INVENTION

### 1. Field of the Invention

The present invention relates to a pressure regulator for a hydrogen fuel cell electric vehicle, and more particularly, to a sealing structure of a pressure regulator for a hydrogen fuel cell electric vehicle, for minimizing pressure change at an outlet according to pressure change at an inlet.

### 2. Description of the Related Art

In general, a pressure control regulator maintains pressure at an output side within a regular range independently of pressure fluctuation at an input side, and the pressure control regulator is utilized in various industrial fields such as chemistry, oil refining, and gas. For example, in the case of a fuel cell vehicle, a high-pressure tank is used for increasing a driving distance, so that a high-pressure regulator is essentially mounted to decompress fuel pressure. Particularly, a structure for a high-pressure regulator of a vehicle is important. That is, the structure for the high-pressure regulator of the vehicle has to be configured in a lightweight, thin, small, and compact structure, while minimizing the pressure change at the outlet according to the pressure change at the inlet.

Korean registered patent publication No. 0938151 (entitled "Regulator for High-pressure Gas", published on Jan. 09, 2008)includes a main body having an intermediate connection passage and a bypass passage, first and second decompression chambers communicating with each other through the intermediate connection passage formed in the main body, a check valve installed at an inlet side of the first decompression chamber to prevent gas leakage, a piston and a spring installed in the first and second decompression chambers, and so on. Accordingly, gas of excessive pressure is decompressed and supplied in proper pressure.

Korean unexamined patent publication No. 2008-0107980 (entitled "Gas Fuel Regulator", published on Dec. 11, 2008) provides a regulator installed at a gas fuel passage, and having a pressure control valve for performing opening and shutting operation by sliding a valve body according to change of pressure inside a pressure control chamber, for controlling gas fuel into predetermined pressure so as to deliver the gas fuel in a downstream side, wherein a surface of the valve body of the pressure control valve is plated with electroless Ni-P containing PTFE. Accordingly, a sealing performance of the pressure control valve is sufficiently obtained over a long period of time.

However, it is not suitable to maintain operation reliability if a structure of related document 1, in which springs are installed on upper and lower sides of a valve shaft, or a structure of related document 2, in which the surface of the valve body is plated, is applied to the fuel cell vehicle having serious pressure fluctuation.

### SUMMARY OF THE INVENTION

In order to solve the problems described above, an object of the present invention is to provide a sealing structure of a pressure regulator for a hydrogen fuel cell electric vehicle, for minimizing pressure change at an outlet according to pressure change at an inlet, based on an energized seal during a process of decompressing hydrogen fuel of high pressure.

To achieve the object described above, the present invention provides a sealing structure used in a high-pressure regulator for decompressing fuel supply pressure of the vehicle into low pressure, according to claim 1.

In detail, according to the present invention, the auxiliary part of the sealing member includes an O-ring inserted into one side of a body part or a backup ring accommodated at a bottom surface of the body part.

In detail, according to the present invention, the auxiliary part of the sealing member includes a multi-sill at an outer circumferential surface of a blade part.

In detail, according to the present invention, the auxiliary part of the sealing member includes a flange laterally extending from a bottom surface of a body part.

According to the present invention, an elastic part accommodated in a blade part of the sealing member includes a spring having a W-shaped cross section.

According to the present invention as described above, operation reliability is increased by minimizing the pressure change at the outlet according to the pressure change at the inlet, based on the energized seal during the process of decompressing the high-pressure hydrogen fuel in the hydrogen fuel cell electric vehicle.

### BRIEF DESCRIPTION OF THE DRAWINGS

FIG. 1 is a view showing one example of a regulator for a vehicle according to the present invention.
FIG. 2 is a view showing a representative example of a sealing structure according to the present invention.
FIG. 3 is a view showing an alternative example of the sealing structure according to the present invention.

### DETAILED DESCRIPTION OF THE INVENTION

Hereinafter, embodiments of the present invention will be described in detail with reference to accompanying drawings.

The present invention proposes a high-pressure regulator for decompressing fuel supply pressure of a vehicle into low pressure. Particularly, in a hydrogen fuel cell electric vehicle, the regulator may decompress high-pressure hydrogen compressed up to a maximum of 87.5 MPa to supply the hydrogen in set pressure, but not necessarily limited to this.

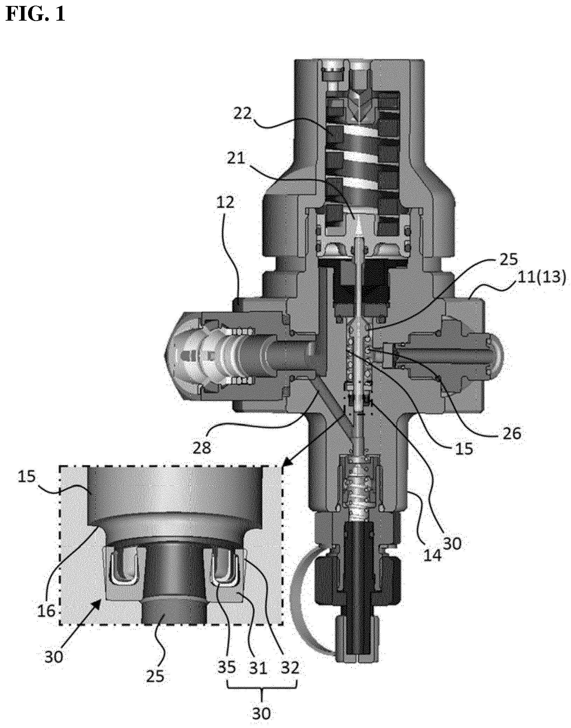

According to the present invention, a body 10 has a structure of providing low pressure at a lower end of a spool 25 through a balance groove 28 communicating with an outlet port 12. In FIG. 1, the body 10 includes a hollow 15 at a center in a vertical axial direction, a valve port 14 at a lower end, and an inlet port 11, the outlet port 12, and a sensor port 13 at a side surface in a radial direction. Pressure of hydrogen (gas) at the inlet port 11 fluctuates between 2.0 MPa and 87.5 MPa, whereas the pressure at the outlet port 12 can be stably maintained at 1.6 MPa.

In this case, an upper end of the spool 25 is supported by a piston 21, a lower end of the spool 25 is a free end, and a middle portion of the spool 25 has a lower spring 26. The piston 21 maintains set decompression pressure by an elastic force of an upper spring 22. The balance groove 28 communicates with the outlet port 12 and the valve port 14, and provides the low pressure at the lower end of the spool 25 installed to be movable in a vertical direction. Accordingly, shock-absorbency of the spool 25 is improved, so that outlet pressure change of the outlet port 12 according to inlet pressure change at the inlet port 11 can be minimized.

In addition, according to the present invention, a sealing member 30 including an auxiliary part for enhancing airtightness at a spring-energized seal has a structure of being accommodated on the body 10 to maintain the low pressure of the spool 25. The spring-energized seal has a structure of accommodating an elastic part 35, which is a SUS-based thin spring, within a blade part 32 of a body part 31 formed of a resin and shaped in a circular arc, so as to constantly preserve the airtightness in a variable pressure range. Accordingly, the sealing member 30 simultaneously makes close contact with the body 10 and the spool 25 in a compressed state, thereby maintaining a sealing state between a major area of the spool 25 where high pressure is applied and the lower end of the spool 25 where the low pressure is applied.

Meanwhile, in the present invention, high-temperature ultra-high-molecular-weight polyethylene (UHMW-PE, which is called "Aloymer") is preferably used for the body part 31 and the blade part 32 of the sealing member 30. Accordingly, a friction coefficient is low, thereby ensuring a smooth vertical movement of the spool 25 while displaying favorable processability and high durability.

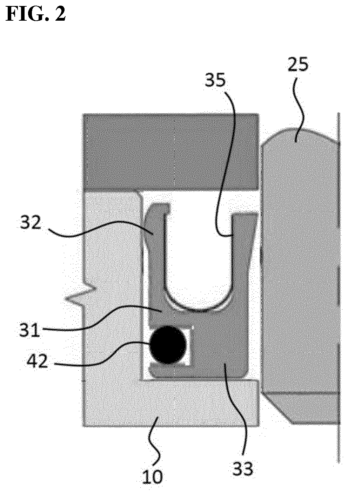

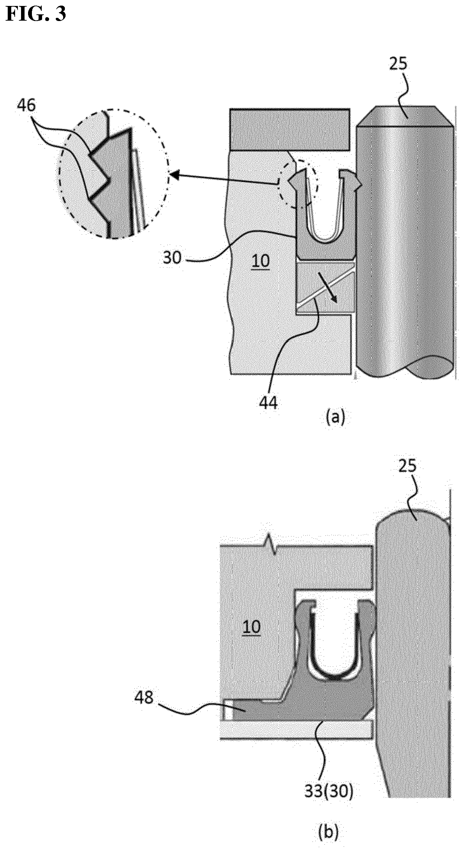

According to the present invention, the auxiliary part of the sealing member 30 includes an O-ring 42 inserted into one side of a body part 31 or a backup ring 44 accommodated at a bottom surface of the body part 31. In FIG. 2, the O-ring 42 is installed at an outer surface of an extension part 33, which extends downwards from the body part 31 and makes contact with the body 10. The O-ring 42 is formed of a material having a property similar to that of the sealing member 30, but not excluding standard products of low price. In FIG. 3(a), the backup ring 44 is formed of Teflon, and may be installed together with the O-ring 42 to enhance durability. If the backup ring 44 is formed to have a triangular cross section and two backup rings 44 are stacked, it is advantageous for the smooth vertical movement of the spool 25.

According to the present invention, the auxiliary part of the sealing member 30 includes a multi-sill 46 at an outer circumferential surface of the blade part 32. The sealing member 30 is preferably set at a portion thereof, which makes contact with the spool 25, to have roughness of 6.3 s (Rmax) or less, and hardness of 40 HRc or more. At the same time, the contact portion is preferred to make line contact rather than to make surface contact, but abrasion resistance is weakened, therefore the line contact is implemented by the multi-sill 46 to prevent a foreign substance from being stuck. In FIG. 3(a), the multi-sill 46 has a structure that protrudes in the form of two to three annular corrugations. Of course, the multi-sill 46 can be formed at only one of blade parts 32 facing each other, and the number of the multi-sill 46 at the one of the blade parts 32 may differ from the number of the multi-sill 46 at the remaining one of the blade parts 32.

According to the present invention, the auxiliary part of the sealing member 30 includes a flange 48 laterally extending from a bottom surface of the body part 31. In FIG. 3(b), the flange 48 has a structure of extending in a direction opposite to a direction for making contact with the spool 25, such that the flange 48 is accommodated into the body 10. This needs a slightly wider installation space, but it is advantageous for preventing deviation of the sealing member 30.

Meanwhile, the body 10 preferably forms a round 16 of R 0.1 or less at a sill where the lower spring 26 is supported in the hollow 15. The round 16 improves workability upon installation of the sealing member 30 and prevents damage to the body part 31 and so on. Alternatively, a chamfer, which is easy to be processed, can be formed instead of the round 16.

According to the present invention, the elastic part 35 accommodated in the blade part 32 of the sealing member 30 includes a spring having a W-shaped cross section. The elastic part 35 is shown as a spring having a U-shaped cross section in drawings, but the spring having the W-shaped cross section can also be applied according to circumstances. The spring having the U-shaped cross section displays relatively large difference in flexibility (elasticity) at upper and lower ends thereof, whereas the spring having the W-shaped cross section is useful for reducing the flexibility difference at upper and lower ends thereof. The body part 31 and the blade part 32 of the sealing member 30 maintain a structure identical to the structure described above, even when the spring having the W-shaped cross section is applied.

The O-ring 42, the multi-sill 46, and the flange 48 of the sealing member 30 are separately described in the present invention, but at least two of the above elements may be combined according to applications.

## Claims

1. A sealing structure of a pressure regulator used for a hydrogen fuel cell electric vehicle to decompress fuel supply pressure of the vehicle into low pressure, the sealing structure comprising:
a body (10) for providing the low pressure at a lower end of a spool (25) through a balance groove (28) communicating with an outlet port (12); and
a sealing member (30) accommodated on the body (10) to maintain the low pressure of the spool (25), and including an auxiliary part for enhancing airtightness at a spring-energized seal,
**characterized in that**
the auxiliary part of the sealing member (30) comprises an O-ring (42) inserted into one side of a body part (31) and two stacked backup rings (44) accommodated at a bottom surface of the body part (31), each of the backup rings (44) having a triangular cross section; and
a flange (48) laterally extending from a bottom surface of a body part (31), and
an elastic part (35) accommodated in a blade part (32) of the sealing member (30) comprises a spring having a W-shaped cross section.

2. The sealing structure of claim 1, wherein the auxiliary part of the sealing member (30) comprises a multi-sill (46) at an outer circumferential surface of a blade part (32).

## Patentansprüche

1. Eine Dichtungsstruktur eines Druckreglers zur Verwendung für ein Wasserstoff-Brennstoffzellenfahrzeug zur Minderung des Brennstoffversorgungsdrucks des Fahrzeugs in Niederdruck, wobei die Dichtungsstruktur umfasst:
ein Gehäuse (10) zur Bereitstellung des Niederdrucks an einem unteren Ende eines Steuerkolbens (25) durch eine mit einer Austrittsöffnung (12) in Verbindung stehende Ausgleichsnut (28); und
ein an dem Gehäuse (10) angeordnetes Dichtungselement (30) zur Aufrechterhaltung des Niederdrucks des Steuerkolbens (25), welches ein Zusatzteil zur Erhöhung der Luftdichtigkeit an einer federunterstützten Dichtung umfasst,
**dadurch gekennzeichnet, dass**
das Zusatzteil des Dichtungselements (30) einen in eine Seite eines Gehäuseteils (31) eingeführten O-Ring (42) und zwei auf einer Bodenfläche des Gehäuseteils (31) übereinander angeordnete Stützringe (44) umfasst, wobei jeder der Stützringe (44) einen dreieckigen Querschnitt aufweist; und
einen sich seitlich von einer Bodenfläche eines Gehäuseteils (31) erstreckenden Flansch (48) umfasst, und
ein in einem Schenkelteil (32) des Dichtungselements (30) angeordnetes elastisches Teil (35) umfasst eine Feder mit einem W-förmigen Querschnitt.

2. Die Dichtungsstruktur nach Anspruch 1, wobei das Zusatzteil des Dichtungselements (30) eine Mehrfachschwelle (46) an einer äußeren Umfangsfläche eines Schenkelteils (32) umfasst.

## Revendications

1. Une structure d'étanchéité d'un régulateur de pression utilisé pour un véhicule électrique à pile à combustible hydrogène afin de détendre la pression d'alimentation en combustible du véhicule à une basse pression, la structure d'étanchéité comprenant :
un corps (10) destiné à produire la basse pression à une extrémité inférieure de tiroir (25) par le biais d'une rainure d'équilibrage (28) communiquant avec un orifice de sortie (12) ; et
un élément d'étanchéité (30) logé sur le corps (10) pour maintenir la basse pression du tiroir (25), et comportant une partie auxiliaire destinée à renforcer l'étanchéité à l'air au niveau d'un joint d'étanchéité activé par ressort,
**caractérisée en ce que** :
la partie auxiliaire de l'élément d'étanchéité (30) comprend un joint torique (42) inséré dans un côté de partie corps (31) et deux bagues d'appui empilées (44) logées sur une surface inférieure de la partie corps (31), chacune des bagues d'appui (44) ayant une section transversale triangulaire ; et
une bride (48) s'étendant latéralement depuis une surface inférieure de partie corps (31), et une partie élastique (35) logée dans une partie lame (32) de l'élément d'étanchéité (30) comprend un ressort ayant une section transversale en forme de W.

2. La structure d'étanchéité selon la revendication 1, dans laquelle la partie auxiliaire de l'élément d'étanchéité (30) comprend un appui multiple (46) sur une surface circonférentielle extérieure de partie de lame (32).
